# EUROPÄISCHE PATENTANMELDUNG

(11) **EP 1 681 427 A1**
(43) Veröffentlichungstag der Anmeldung: **19.07.2006**
(21) Anmeldenummer: 05027726.8
(22) Anmeldetag: 19.12.2005
(51) Int. Cl.: E06B 1/02

(54) **Kombinierbare Steckzarge**

(30) Priorität: 12.01.2005 DE 102005001624
(71) Anmelder: DORMA GMBH & CO. KG, 58256 Ennepetal (DE)
(72) Erfinder: Glanz, Michael, 50765 Köln (DE); Lange, Siegfried, Dr., 58339 Breckerfeld (DE); Linnenbaum, Helmut, 48282 Emsdetten (DE)

(57) **Zusammenfassung**

Die Erfindung betrifft eine kombinierbare Steckzarge zum Einbau in Öffnungen in Wänden, wobei die Steckzarge eine Leibung der Öffnung umgreift. Durch die Verwendung einer Zargenhaupt- und Zargengegenschale (19, 20), die über ein Justierankerelement (22) mit einer Steckaufnahme durch wenigstens eine Justierschraube verstellbar angeordnet ist, wird ein darunter liegender dreiseitig umlaufender Montageraum (1) abgedeckt. Innerhalb des Montageraumes (1) können entsprechende Installationsgeräte eingebracht werden.

## Beschreibung

Die Erfindung betrifft eine kombinierbare Steckzarge gemäß dem Oberbegriff des Patentanspruches 1.

Eine derartige Steckzarge ist aus der DE 199 00 095 C1 bekannt geworden. Eine dort gezeigte Zargenvorrichtung, die aus zwei Teilen zusammengesetzt wird und für Öffnungen in Wänden einfach und genau zu montieren ist, besteht im Wesentlichen aus einer Zargenhauptschale und einer Zargengegenschale. Dabei ist eine Justierplatteneinheit vorhanden, die ein Justierankerelement mit einer Steckaufnahme beinhaltet, in dem wenigstens eine Justierschraube verstellbar angeordnet ist. Die Zargengegenschale, an der ein Notwinkelelement angeordnet ist und wenigstens ein Justierankerelement beinhaltet, das mit den Befestigungsschrauben an einer Wandleibung der Wand aufzuschrauben und mit den Justierschrauben gegenüber dieser einjustierbar ist, stellt ein zentrales Bauteil dar. Die mit dieser Erfindung erzielten Vorteile bestehen insbesondere darin, dass die Zargengegenschale mit dem daran befestigten Justierankerelement gegenüber der Leibungsfläche justiert und daran an dieser auch festgelegt wird. Eine solche Zargengegenschale ist mit wenigen Handgriffen montiert.

Die Aufgabe der Erfindung besteht darin, eine Steckzarge der eingangs genannten Art so weiter auszubilden, dass die Steckzarge auch weitere Funktionen innerhalb eines Gebäudes übernehmen kann.

Die Erfindung löst die Aufgabe gemäß der Lehre nach den Merkmalen des Patentanspruches 1.

In zunehmendem Maße werden in der heutigen Zeit im Innenausbau Wände zum einen aus Gipskartonplatten bzw. auch in Betonausführung neben der konventionellen Art des Mauerns hergestellt. Da die Montagearbeiten auf einem Bau ein nicht zu verachtender Kostenfaktor sind, ist man bemüht, derartige Arbeiten, die insbesondere das Verlegen von elektrischen Leitungen und die damit verbundenen Arbeiten, wie Setzen von Unterputzdosen, zu erleichtern. Eine Reduzierung der Arbeitszeiten bringt an dieser Stelle eine enorme Kosteneinsparung. Die Reduzierung der Montagekosten kann dadurch erzielt werden, dass erfindungsgemäß um die üblicherweise verwendete Zarge auf der zur Leibung gerichteten Seite ein dreiseitig umlaufender, in sich geschlossener Montageraum vorhanden ist. Ein solcher Montageraum ist integraler Bestandteil der Zarge und würde sämtliche Montagearbeiten, die hinsichtlich elektrotechnischer Art sind und insbesondere mit der Tür in Verbindung stehen, wesentlich erleichtern.

Innerhalb des Montageraumes, der vorzugsweise im Wesentlichen aus einem U-förmigen Grundprofil besteht, sind Abstandshalter eingebracht und mit diesem kraft- und formschlüssig verbunden. Wie sich zeigt, besteht durch so eine Konstruktion der Montageraum aus einem stabilen Bauelement. Es sei erwähnt, dass innerhalb der Abstandshalter Durchbrüche vorhanden sind, so dass eine Verlegung von elektrischen Leitungen innerhalb des Montageraumes keine Problem bereitet. Dadurch, dass der Montageraum dreiseitig um den Zargenbereich sich erstreckt, kann ohne große Probleme beispielsweise von der linken Seite der Zarge elektrische Leitungen auf die rechte Seite der Zarge und damit weiter in dem Raum verlegt werden. Die hier notwendigerweise sonst anfallenden Stemmarbeiten im Bodenbereich können durch die erfindungsgemäße Steckzarge entfallen.

Um aber auch im türnahen Bereich elektrische Geräte zu platzieren, befinden sich in einem variablen zu bestimmenden Rastermaß innerhalb des Montageraumes vorgestanzte Montagedurchbrüche, die es erlauben, beim Entfernen der Platten, hier entsprechende Gerätedosen einzubauen. Dabei können, je nach Verwendungsart, diese Montagedurchbrüche rund bzw. auch quadratisch ausgeführt werden.

So können in die Montagedurchbrüche separat ausgebildete Komponenten als auch aus mehreren einzelnen Komponenten bestehenden Gruppen von Geräten usw. eingesetzt werden. Die elektrischen Verbindungen können vorzugsweise über Steckverbindungen, die sich innerhalb des U-förmigen Hohlraumes des Montageraumes befinden, realisiert werden. Im Übrigen ist der Hohlraum innerhalb des U-förmigen Grundprofiles ohne große Probleme von der Türseite her zugänglich, da in diesem Bereich die Zugänglichkeit nur durch die bereits genannten Abstandshalter und entsprechende schmale Haltestücke für die Zargenhaupt- und Zargengegenschale zur Befestigung unterbrochen wird. Hierdurch wird deutlich, dass beim Abnehmen der Zargenhauptschale direkt eine Zugänglichkeit zu dem Montageraum gegeben ist. Dieses trifft natürlich für alle drei Seiten des Montageraumes gleichermaßen zu. Aufgrund der Tatsache, dass es sich bei der Steckzarge um eine mit wenigen Handgriffen aus der Zargenhaupt- und Zargengegenschale zusammensetzbare Zarge handelt, kann hier in einem Wartungsfall, ohne große Demontagearbeiten, die Zugänglichkeit zu dem Montageraum erbracht werden, wobei die Funktionsfähigkeit der Geräte innerhalb des Montageraumes vollständig erhalten bleibt.

Es sei noch erwähnt, dass innerhalb der Montagedurchbrüche neben Schaltern und Steckdosen auch Anzeigeelemente und insbesondere Komponenten für eine Rettungswegtechnik und Sicherungstechnik eingesetzt werden kann.

Im oberen horizontalen Teil des Montageraumes ist aufgrund der gegebenen Platzverhältnisse der Einbau eines Antriebes oder eines Türschließers ohne Probleme möglich. Dieses würde das gesamte Erscheinungsbild einer solchen Tür auch aufwerten, da keinerlei Gerätschaften nach außen sichtbar sind. Ferner kann ein Anzeigeelement eingebaut werden.

Ein Montageraum der vorgenannten Art kann preiswert aus Stahlblech bzw. Aluminiummaterial hergestellt werden.

Damit der Montageraum nach außen nicht in Erscheinung tritt, springt er gegenüber dem umlaufenden Zargenspiegel auf jeder Seite der Zarge entsprechend zurück. Dadurch ist es möglich, dass aufgrund der Breitenanpassung bei Gebäudewandstärken der Montageraum diesem entsprechend angepasst ist. Neben einer einfachen Befestigung durch den Montageraum mit der Wand ist eine genaue Ausrichtung sowohl in der Höhe als auch in der Waage möglich. Dieses erleichtert insbesondere auch die spätere Montage der Zargenhaupt- und Zargengegenschale aufgrund ihrer nicht dauerhaft miteinander verbundenen Ausführungsart.

Selbst bei einer Ausführung von Trennwänden, die aus Gipskartonplatten hergestellt werden, ist eine Verwendung des Montageraumes möglich. Der Montageraum kann auch hier gleichzeitig dafür verwendet werden, die üblicherweise im Bereich von Durchbrüchen einzusetzenden Profilträger entfallen zu lassen. Auch in einem solchen Fall springen die entsprechenden seitlichen Flächen des Montageraumes zurück, damit hier die Gipskartonplatten einen sauberen Anschluss für die nachträglich einzusetzenden Steckzargen bilden können.

Somit wird deutlich, dass eine kombinierbare Steckzarge der vorgenannten Art in Verbindung mit einem zu verbindenden und auch wieder trennbaren Montageraum große Vorteile gegenüber dem Stand der Technik bietet. Auch bei nachträglichen Reparatur- bzw. Montagearbeiten ist die gute Zugänglichkeit des Montageraumes ein Argument, um Kosten zu sparen. Neben der vorbeschriebenen zweiteiligen Zarge können den Montageraum natürlich auch einteilige und zweiteilige Zargen überkronen.

Die Erfindung wird nachfolgend an einem schematisch dargestellten Ausführungsbeispiel näher erläutert.

### Es zeigen:

- Figur 1:: Eine Explosionszeichnung eines Montageraumes mit daneben platzierter Zargenhauptschale und Zargengegenschale sowie in den Montageraum zu integrierenden Geräten.
- Figur 2:: Einen Montageraum in der Vorderansicht.
- Figur 3:: Einen Montageraum in der Draufsicht.
- Figur 4:: Einen Montageraum in der Perspektive.
- Figur 5:: Eine Explosionszeichnung eines Montageraumes.

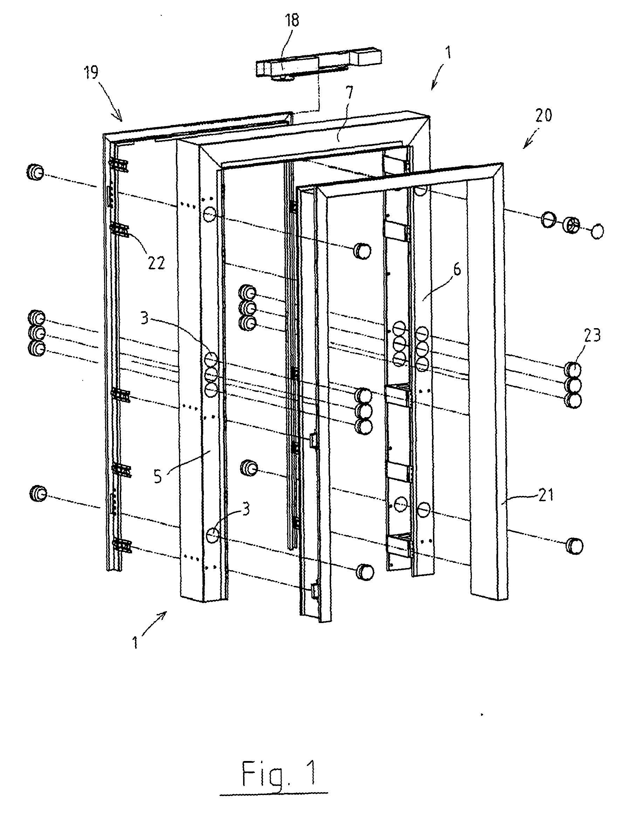

Die Figur 1 gibt in einer perspektivischen Explosionszeichnung eine kombinierbare Steckzarge mit einer Zargengegenschale 19 und einer Zargenhauptschale 20 und einen Montageraum 1 wieder. Der Montageraum 1 bildet ein dreiseitig um die Steckzarge herum platziertes Bauteil. Dabei besteht der Montageraum 1 aus einem Seitenteil 5 und einem Seitenteil 6, die im oberen, horizontalen Bereich durch ein Oberteil 7 miteinander verbunden sind. Innerhalb des Oberteiles 7 kann ein Antrieb 18 in Form eines elektromechanischen oder elektrohydraulischen Antriebes sowie eines Türschließers eingebaut werden. In den seitlichen vertikalen Bereichen des Montageraumes 1 sind vorgestanzte Montagedurchbrüche 3 vorhanden, in die Installationsdosen 23 eingesetzt werden können. Je nach Bedarf können diese vorgestanzten Montagedurchbrüche herausgebrochen werden und entsprechend mit Installationsgeräten versehen werden. Es versteht sich, dass die Durchbrüche neben der runden Ausführung auch quadratische oder rechteckige Durchbrüche aufweisen können.

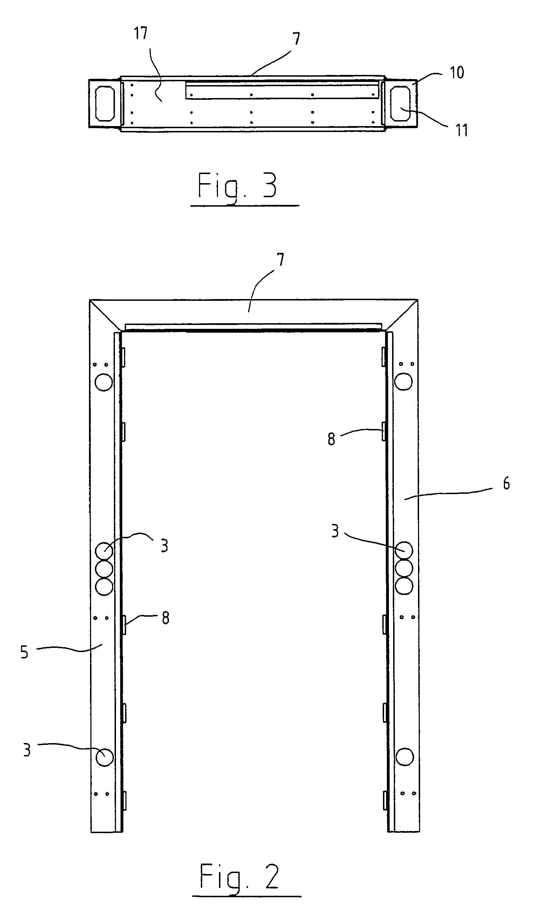

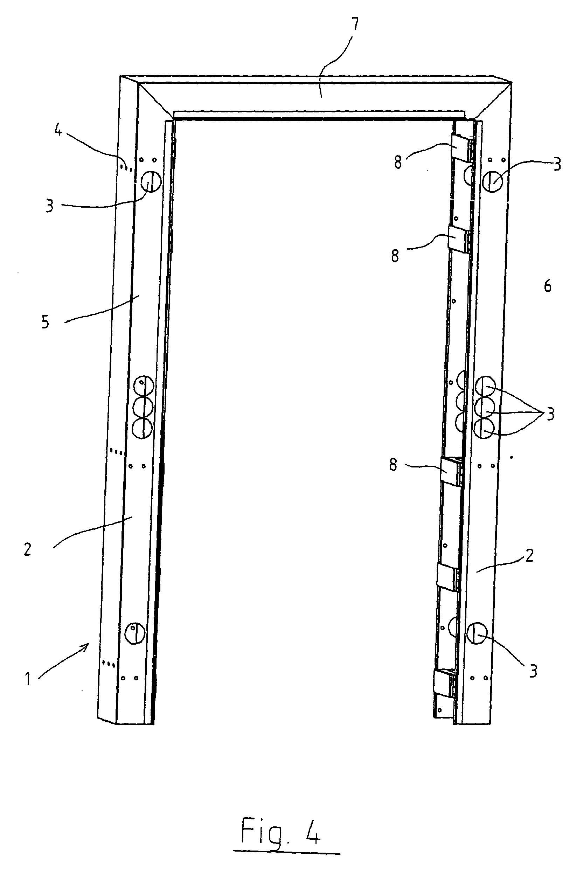

In der separaten Darstellung der Figur 4 wird noch einmal der Montageraum 1 als Ganzes in der Perspektive wiedergegeben. Der Montageraum 1 besteht dabei im Wesentlichen aus einem U-förmig gebogenen Grundprofil 2. Damit eine Zugänglichkeit des Montageraumes 1 nach dem Entfernen, zumindest der Zargenhauptschale 20, möglich ist, ist der Montageraum 1 zur Steckzarge hingesehen offen. Diese Öffnung wird nur dadurch unterbrochen, dass entsprechende Haltestücke 8 vorhanden sind, die zum einen dem offenen U des Grundprofiles 2 eine entsprechende Stabilität geben, zum anderen dienen jedoch die Haltestücke 8 auch dafür, um entsprechend die Steckzarge mit den Justierankerelementen 22 an diesen Haltestücken 8 zu befestigen. Die Platzierung der Haltestücke 8 ist auch aus der Ansicht der Figur 2 zu entnehmen.

In der Figur 3 wird in einer Unteransicht das Oberteil 7 des Montageraumes 1 wiedergegeben. Dabei befindet sich in dem Oberteil 7 ein Verschlussblech 17 sowie seitlich daran angeordnete Abstandshalter 10, die mit einem Durchbruch für Installationsleitungen versehen sind.

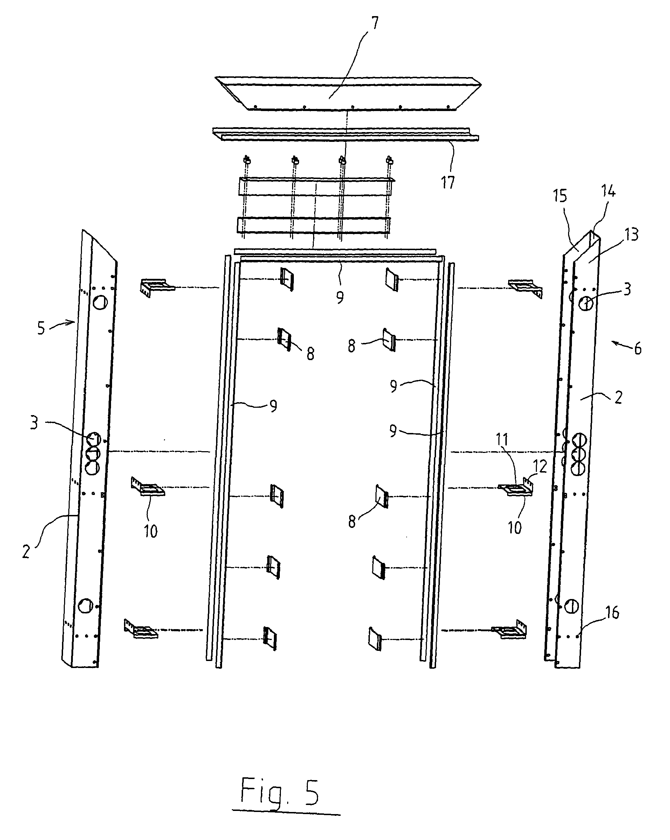

Den gesamten Aufbau des Montageraumes 1 gibt die Figur 5 wieder. Dabei besteht der Montageraum 1 im Wesentlichen aus dem U-förmigen Grundprofil 2, welches aus dem Seitenteil 5 und dem Seitenteil 6 in Verbindung mit dem Oberteil 7 zu einem umlaufenden Montageraum 1 um die Steckzarge zusammengesetzt wird. Neben den bereits erwähnten Haltestücken 8 befinden sich innerhalb des Grundprofiles 2 die Abstandshalter 10. Die Abstandshalter 10 geben dem Grundprofil 2 entsprechende große Stabilität, da sie über die Abwinkelung 12 kraft- und formschlüssig mit dem Grundprofil 2 verbunden werden. Die Anzahl der Abstandshalter 10 ist je nach Zargengröße und damit auch von der Größe des Montageraumes 1 abhängig. Den vorderen Abschluss des U-förmigen Grundprofiles bilden seitliche Winkel 9, die gleichzeitig für den Anschlag der Zargenhauptschale 20 und der Zargengegenschale 19 dienen.

### Bezugszeichenliste

- 1: Montageraum
- 2: Grundprofil
- 3: Montagedurchbruch
- 4: Befestigungsbohrungen
- 5: Seitenteil
- 6: Seitenteil
- 7: Oberteil
- 8: Haltestück
- 9: Winkel
- 10: Abstandshalter
- 11: Durchbruch
- 12: Abwinkelung
- 13: Seitenwand
- 14: Rückwand
- 15: Seitenwand
- 16: Bohrung
- 17: Verschlussblech
- 18: Antrieb
- 19: Zargengegenschale
- 20: Zargenhauptschale
- 21: Zargenspiegel
- 22: Justierankerelement
- 23: Installationsdose

## Patentansprüche

1. Kombinierbare Steckzarge zum Einbau in Öffnungen in Wänden, wobei die Steckzarge eine Leibung der Öffnung umgreift, insbesondere bestehend aus einer Zargenhaupt- und einer Zargengegenschale, die über ein Justierelement mit einer Steckausnehmung durch wenigstens eine Justierschraube verstellbar angeordnet sind, **dadurch gekennzeichnet, dass** umlaufend auf der zur Leibung gerichteten Seite der Zargenhaupt- und Zargengegenschale (19, 20) ein dreiseitig umlaufender Montageraum (1) vorhanden ist.

2. Kombinierbare Steckzarge nach Anspruch 1, **dadurch gekennzeichnet, dass** die Zargengegenschale (19) justierbar kraft- und formschlüssig mit dem Montageraum (1) verbunden wird.

3. Kombinierbare Steckzarge nach einem der vorhergehenden Ansprüche, **dadurch gekennzeichnet, dass** der Montageraum 1 aus einzelnen Profilteilen (5, 6, 7, 8, 9, 10) besteht, die untereinander kraft- und formschlüssig miteinander verbunden sind.

4. Kombinierbare Steckzarge nach einem der vorhergehenden Ansprüche, **dadurch gekennzeichnet, dass** der Montageraum (1) im Wesentlichen aus einem U-förmigen Grundprofil (2) besteht, in dem mehrere Abstandshalter (10) kraft- und formschlüssig eingebracht sind.

5. Kombinierbare Steckzarge nach einem der vorhergehenden Ansprüche, **dadurch gekennzeichnet, dass** der Montageraum (1) im Wesentlichen aus einem U-förmigen Grundprofil (2) besteht, in dem mehrere Anstandshalter (10) kraft- und formschlüssig eingebracht sind und über Haltestücke (8) an der Zargengegenschale (19) befestigt sind.

6. Kombinierbare Steckzarge nach einem der vorhergehenden Ansprüche, **dadurch gekennzeichnet, dass** in den Abstandshaltern (10) Durchbrüche (11) vorhanden sind.

7. Kombinierbare Steckzarge nach einem der vorhergehenden Ansprüche, **dadurch gekennzeichnet, dass** in dem Grundprofil (2) Befestigungsbohrungen (4) zur Befestigung des Montageraumes (1) in der Leibung der Wandöffnungen vorhanden sind.

8. Kombinierbare Steckzarge nach einem der vorhergehenden Ansprüche, **dadurch gekennzeichnet, dass** in dem Grundprofil (2) vorgestanzte Montagedurchbrüche (3) vorhanden sind.

9. Kombinierbare Steckzarge nach einem der vorhergehenden Ansprüche, **dadurch gekennzeichnet, dass** die Montagedurchbrüche (3) in einem bestimmten Rastermaß angeordnet sind.

10. Kombinierbare Steckzarge nach einem der vorhergehenden Ansprüche, **dadurch gekennzeichnet, dass** die Montagedurchbrüche (3) rund und/oder quadratisch und/oder rechteckig sind und maßlich auf elektrotechnischen Geräten abgestimmt sind, insbesondere zur Aufnahme von Unterputzgeräten geeignet sind.

11. Kombinierbare Steckzarge nach einem der vorhergehenden Ansprüche, **dadurch gekennzeichnet, dass** in dem Montageraum (1) ein automatischer Antrieb für eine innerhalb der Steckzarge einzusetzenden Tür eingebaut werden kann.

12. Kombinierbare Steckzarge nach einem der vorhergehenden Ansprüche, **dadurch gekennzeichnet, dass** in dem Montageraum (1) ein Türschließer (18) für eine innerhalb der Steckzarge einzusetzenden Tür eingebaut werden kann.

13. Kombinierbare Steckzarge nach einem der vorhergehenden Ansprüche, **dadurch gekennzeichnet, dass** der Antrieb oder Türschließer (18) verdeckt im horizontalen Teil (7) des Montageraumes (1) eingebaut werden kann.

14. Kombinierbare Steckzarge nach einem der vorhergehenden Ansprüche, **dadurch gekennzeichnet, dass** der Montageraum (1) aus Stahlblech oder Aluminiumblech besteht.

15. Kombinierbare Steckzarge nach einem der vorhergehenden Ansprüche, **dadurch gekennzeichnet, dass** der Montageraum (1) gegenüber umlaufenden Zargenspiegeln (21) der Zargenhaupt- und Zargengegenschale (19, 20) zurückspringt.

16. Kombinierbare Steckzarge nach einem der vorhergehenden Ansprüche, **dadurch gekennzeichnet, dass** der Montageraum (1) in seiner Breite auf übliche Wandstärken von Gebäudewandstärken abgestimmt ist.

17. Kombinierbare Steckzarge nach einem der vorhergehenden Ansprüche, **dadurch gekennzeichnet, dass** der Montageraum (1) bei Trennwänden aus Gipskartonplatten eine Breite der für den Aufbau einer solchen Wand zu verwendenden Profilträger aufweist.

18. Kombinierbare Steckzarge nach einem der vorhergehenden Ansprüche, **dadurch gekennzeichnet, dass** der Montageraum (1) die üblicherweise bei einer Gipskartonwand verwendeten Profilträger ersetzt.

19. Kombinierbare Steckzarge nach einem der vorhergehenden Ansprüche, **dadurch gekennzeichnet, dass** der Montageraum (1) an seinen Seitenwänden (13, 15) mit Putz- oder Gipskartonplatten verkleidet wird.

20. Kombinierbare Steckzarge nach einem der vorhergehenden Ansprüche, **dadurch gekennzeichnet, dass** der Montageraum (1) bei entfernter Zargenhauptschale (20) zugänglich ist.
